# NEUE EUROPÄISCHE PATENTSCHRIFT

(11) **EP 1 407 935 B2**
(45) Veröffentlichungstag und Bekanntmachung des Hinweises auf die Entscheidung über den Einspruch: **05.10.2016**
(45) Hinweis auf die Patenterteilung: 26.04.2006
(21) Anmeldenummer: 03019819.6
(22) Anmeldetag: 30.08.2003
(51) Int. Cl.: B60R 13/04

(54) **Kraftfahrzeug-Anbauteil**
Vehicle Assembling Element
Eléments de montage de voiture

(30) Priorität: 10.10.2002 DE 20215854 U
(43) Veröffentlichungstag der Anmeldung: 14.04.2004
(73) Patentinhaber: Süddeutsche Aluminium Manufaktur GmbH, 89558 Böhmenkirch (DE)
(72) Erfinder: Schabel, Wolfgang, 73113 Ottenbach (DE); Binder, Hans, 89558 Böhmenkirch (DE)
(74) Vertreter: Peterreins Schley

(56) Entgegenhaltungen:
- EP-A- 0 293 198
- EP-A- 0 351 114
- DE-A- 1 455 855
- DE-A- 19 506 656
- DE-A- 19 519 866
- DE-A- 19 721 796
- DE-U- 1 837 394
- DE-U- 20 207 754
- GB-A- 926 418
- PATENT ABSTRACTS OF JAPAN Bd. 0152, Nr. 63 (C-0847), 4. Juli 1991 (1991-07-04) -& JP 03 089973 A (MITSUBISHI MOTORS CORP), 15. April 1991 (1991-04-15)

## Beschreibung

Die Erfindung betrifft ein Ziertel für den Außenanbau an einem Kraftfahrzeug aus eloxiertem Aluminium, siehe zum Beispiel die DE 20207754 U.

Herkömmliche Kraftfahrzeug Anbauteile aus Aluminium sind poliert oder eloxiert. Beim Waschen der Fahrzeuge, insbesondere in automatischen Waschstraßen, kommen die Anbauteile mit Reinigungsmitteln in Berührung. Wenn die verwendeten Reinigungsmittel einen höheren PH-Wert als zum Beispiel 9 aufweisen, kann dies zu einer sichtbaren Beeinträchtigung der Oberfläche der Anbauteile führen.

Aus der EP 351114 A ist bekannt geworden, auf ein Rad aus Aluminium eine dünnkeramische Beschichtung aufzubringen, um Korrosion zu verringern.

Die Patentschrift GB 926,418 und DE 1837394 U offenbaren ein Zierteil für den Außenanbau an einem Kraftfahrzeugs aus eloxiertem Aluminium, das mit einer Wasserglasschicht beschichtet ist.

Aufgabe der Erfindung ist es, ein Zierteil für den Außenanbau an einem Kranfahrzeug gemäß dem Oberbegriff des Anspruchs 1 zu schaffen, dessen Oberfläche eine hohe Beständigkeit gegen Säuren, Laugen und Lösungsmittel aufweist.

Die Aufgabe ist durch ein Zierteil für den Außenanbau an einem Kraftfahrzeug gelöst, dass die Merkmale des Anspruchs 1 aufweist. Dadurch dass das Aluminium Teil sowohl eloxiert als auch gemäß Anspruch 1 beschichtet wird, wird eine hohe Beständigkeit der Oberfläche erreicht. Besondere Ausführungsarten der Erfindung sind in den Unteransprüchen offenbart.

Bei dem Zierteil für den Außenanbau an einem Kraftfahrzeug handelt es sich zum Beispiel um einen Fensterschacht, eine Dachreling oder eine Zierleiste eines Kraftfahrzeugs aus Aluminium. Die Oberfläche des Teils ist eloxiert. Das Teil ist außen, zumindest teilweise, mit einer dünnen keramischen Beschichtung versehen. Für die dünnkeramische Beschichtung können zum Beispiel Produkte verwendet werden, die unter der Marke ALUCERAM oder der Bezeichnung Cerapaint vertrieben werden. Die dünnkeramische Beschichtung gewährleistet eine hohe chemische Beständigkeit gegen die meisten Säuren, Laugen und Lösungsmittel. Außerdem weist die dünnkeramische Beschichtung eine extrem geschlossenporige Oberfläche auf und ist nicht nur korrosions- und lichtbeständig, sondern auch stark schmutzabweisend und daher leicht zu reinigen. Die beschichtete Oberfläche des Teils kann farbig und glänzend bis seidenmatt ausgeführt sein.

Ein bevorzugtes Ausführungsbeispiel des Zierteils für den Außenanbau an einem Kraftfahrzeug ist dadurch gekennzeichnet, dass die dünnkeramische Beschichtung elektrisch leitfähig ist. Die Aufbringung der dünnkeramischen Beschichtung kann zum Beispiel im Tauchverfahren erfolgen. Dabei werden die zu beschichtenden Teile in das in flüssiger Form vorliegende Beschichtungsmaterial eingetaucht. Das Tauchverfahren hat jedoch den Nachteil, dass große Mengen des Beschichtungsmaterials benötigt werden und gegebenenfalls unter hohem Kostenaufwand nach dem beschichten entsorgt werden müssen. Außerdem lässt die Schichtqualität der im Tauchverfahren hergestellten Beschichtungen aufgrund von Läufern und Nasen oft zu wünschen übrig. Im Rahmen der vorliegenden Erfindung hat sich heraus gestellt, dass die dünnkeramische Beschichtung auch elektrisch leitfähig gemacht werden kann, um eine elektrostatische Aufbringung derselben zu ermöglichen. Die elektrostatisch aufgebrachte Beschichtung weist eine deutlich bessere Schichtqualität und insbesondere eine nahezu konstante Schichtdicke auf.

Ein weiteres bevorzugtes Ausführungsbeispiel ist dadurch gekennzeichnet, dass die dünnkeramische Beschichtung eine Dicke von 5 bis 10 µm insbesondere von 5 bis 7 µm, aufweist. Das hat einerseits den Vorteil, dass nur relativ wenig Beschichtungsmaterial benötigt wird. Andererseits wurden bei im Rahmen der vorliegenden Erfindung durchgeführten Untersuchungen mit den beanspruchten Schichtdicken die besten Ergebnisse erzielt.

Die Erfindung betrifft auch ein Kraftfahrzeug mit einem vorab beschriebenen Zierteil für den Außenanbau an einem Kraftfahrzeug.

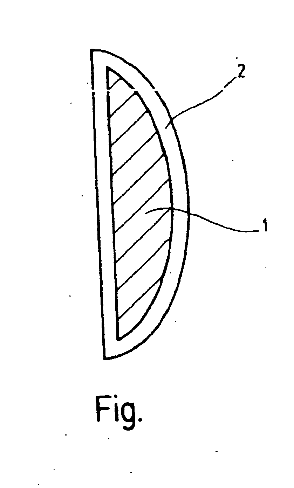

Weitere Vorteile, Merkmale und Einzelheiten der Erfindung ergeben sich aus der nachfolgenden Beschreibung, in der unter Bezugnahme auf die Zeichnung ein Ausführungsbeispiel im Einzelnen beschrieben ist.

In der beiliegenden Figur ist eine Zierleiste 1 eines Kraftfahrzeugs im Querschnitt dargestellt. Die Zierleiste 1 weist im Querschnitt die Gestalt einer entlang ihrer Hauptachse durchgeschnittenen Elypse auf. Die Zierleiste 1 ist von einer dünnen keramischen Beschichtung 2 umgeben, die zur besseren Darstellbarkeit deutlich größer als in Wirklichkeit dargestellt ist. In der Realität weist die dünnkeramische Beschichtung eine Dicke von beispielsweise 6 µm auf.

Die Zierleiste 1 besteht aus Aluminium, dessen Oberflache eloxiert ist. Die Oberfläche der Zierleiste 1 kann aber auch farbig eloxiert sein. Vorzugsweise weist die Oberfläche der Zierleiste 1 vor dem Aufbringen der Beschichtung 2 eine gewisse Rauheit auf, um ein gutes Anhaften der Beschichtung 2 zu gewährleisten.

Die Beschichtung 2 ist vorzugsweise elektrostatisch auf die Zierleiste 1 aufgebracht worden. Beim elektrostatischen Aufbringen wird das elektrisch leitfähige Beschichtungsmaterial mit Hilfe von Versprühvorrichtungen, die zum Beispiel glockenförmig ausgebildet sein können, auf die zu beschichtende Oberfläche aufgebracht. Das von der Versprühvorrichtung versprühte Beschichtungsmaterial wird elektrisch aufgeladen und unter dem Einfluss eines elektrischen Feldes gleichmäßig auf der gesamten Oberfläche der Zierleiste 1 aufgebracht. Das Beschichtungsmaterial 2 kann auch mit anderen nasschemischen Auftragverfahren, wie Spritzen, Rollen, Tauchen, Rakeln oder Walzen auf das zu beschichtende Teil aufgebracht werden.

Die Beschichtung 2 weist eine Bleistifthärte nach Wolf Wilborn von H bis 3H auf. Die Oberfläche der Beschichtung 2 ist porenfrei und geschlossen. Sie weist auch unter hohen Temperaturen eine hohe Härte auf. Die Beschichtung 2 ist unbrennbar sowie hitze- und feuerbeständig. Im Brandfall bilden sich ausgehend von der Beschichtung 2 keinerlei Gase.

Das Beschichtungsmaterial umfasst vorzugsweise ausschließlich anorganische Bestandteile und ist daher umweltfreundlich zu handhaben. Das beschichtete Teil wird zum Beispiel mit geeigneten Befestigungselementen, wie Schrauben oder Schnapphaken, an der Karosserie eines (nicht dargestellten) Kraftfahrzeugs befestigt.

## Patentansprüche

1. Zierteil für den Außenanbau an einem Kraftfahrzeug aus eloxiertem Aluminium,
**dadurch gekennzeichnet, dass** das Anbauteil (1), zumindest teilweise, mit einer dünnkeramischen Beschichtung (2) versehen ist, wobei die Beschichtung (2) eine Bleistifthärte nach Wolff Wilborn von H bis 3H aufweist.

2. Zierteil nach Anspruch 1, **dadurch gekennzeichnet, dass** die dünnkeramische Beschichtung (2) elektrisch leitfähig ist.

3. Zierteil nach einem der vorhergehenden Ansprüche, **dadurch gekennzeichnet, dass** die dünnkeramische Beschichtung (2) eine Dicke von 5 bis 10 µm, insbesondere von 5 bis 7 µm, aufweist.

4. Kraftfahrzeug mit einem Zierteil nach einem der vorhergehenden Ansprüche.

## Claims

1. Decorative object for external assembling on a motor vehicle made of anodized aluminum, **characterised in that** the assembling element (1) is at least partially provided with a thin ceramic coating (2), wherein the coating (2) has a pencil hardness according to Wolff Wilborn of H to 3H.

2. Decorative object according to claim 1, **characterised in that** the thin ceramic coating (2) is an electrical conductor.

3. Decorative object according to any one of the preceding claims, **characterised in that** the thin ceramic coating (2) has a thickness of 5 to 10 µm, especially 5 to 7 µm.

4. Motor vehicle comprising a decorative object according to any one of the preceding claims.

## Revendications

1. Élément de montage de voiture pour le montage extérieur à un véhicule automobile en aluminium anodisé, **caractérisé en ce que** l'élément de montage (1) est muni, au moins partiellement, d'un revêtement céramique (2) de faible épaisseur, le revêtement (2) ayant une dureté au crayon selon Wolff Wilborn de H à 3H.

2. Élément de montage de voiture selon la revendication 1, **caractérisé en ce que** le revêtement céramique (2) de faible épaisseur est électroconducteur.

3. Élément de montage de voiture selon l'une des revendications précédentes, **caractérisé en ce que** le revêtement céramique (2) de faible épaisseur présente une épaisseur de 5 à 10 µm, en particulier de 5 à 7 µm.

4. Véhicule automobile comportant un élément de montage de voiture selon l'une des revendications précédentes.
